# EUROPÄISCHE PATENTSCHRIFT

(11) **EP 2 226 474 B1**
(45) Veröffentlichungstag und Bekanntmachung des Hinweises auf die Patenterteilung: **12.04.2017**
(21) Anmeldenummer: 10150408.2
(22) Anmeldetag: 11.01.2010
(51) Int. Cl.: F01D 17/16, F02C 6/12

(54) **Verstellring für eine Ladeeinrichtung, insbesondere für einen Abgasturbolader eines Kraftfahrzeugs**
Adjustment ring for a charger, in particular for an exhaust gas turbocharger of a motor vehicle
Bague de réglage pour un dispositif de charge, notamment pour un turbo-compresseur de gaz d'échappement d'un véhicule automobile

(30) Priorität: 11.02.2009 DE 102009008531
(43) Veröffentlichungstag der Anmeldung: 08.09.2010
(73) Patentinhaber: Bosch Mahle Turbo Systems GmbH & Co. KG, 70376 Stuttgart (DE)
(72) Erfinder: Prang, Andreas, 72622 Nürtingen (DE); Rentz, Florian, 70193 Stuttgart (DE)
(74) Vertreter: BRP Renaud & Partner mbB Rechtsanwälte Patentanwälte Steuerberater

(56) Entgegenhaltungen:
- EP-A1- 1 564 380
- EP-A1- 1 722 073
- EP-A1- 1 811 135
- EP-A2- 1 227 221
- WO-A1-2007/112910

## Beschreibung

Die Erfindung bezieht sich auf eine Ladeeinrichtung, insbesondere einem Abgasturbolader für ein Kraftfahrzeug, mit einer variablen Turbinen-/Verdichtergeometrie gemäß dem Oberbegriff des Anspruchs 1.

Derartige Ladeeinrichtungen, bei denen die Leitschaufeln der variablen Turbinen- bzw. Verdichtergeometrie mittels eines Stellringes betätigt werden, sind allgemein bekannt.

Die EP 1 564 380 A1 zeigt einen Verstellring, der auf seiner einen Stirnseite einen Ringsteg aufweist, an dem Eingriffsbereiche der Verstellhebel ausgebildet sind. Diese Eingriffsbereiche sind in Axialrichtung des Verstellringes einseitig offen, und zwar auf der freien Seite des Ringsteges. Darüber hinaus sind die Eingriffsbereiche an den radial inneren und radial äußeren Flanken des Ringsteges offen. Damit besitzt der Verstellring eine vergleichsweise komplizierte Gestalt, wobei erschwerend hinzukommt, dass die Verstellhebel nur von einer Stirnseite des Verstellringes aus in die jeweiligen Eingriffsbereiche eingesetzt werden können. Somit kann auch die Montage der verstellbaren Turbinen- bzw. Verdichtergeometrie erschwert sein.

Die WO 2007/112910 A1 zeigt ebenfalls einen Verstellring, dessen Eingriffsbereiche für die Verstellhebel der Leitschaufeln nur an einer Stirnseite des Verstellringes offen sind, so dass die Verstellhebel wiederum nur von einer Stirnseite des Verstellringes aus in die Eingriffsbereiche einsetzbar sind.

Die EP 1 811 135 A1 zeigt einen Verstellring mit einer Außenumfangsnut, die von mehreren in Bohrungen an den Seitenwänden der Nut eingesetzte Bolzen in Axialrichtung des Verstellringes durchsetzt wird. Die Verstellhebel der Leitschaufeln besitzen gabelförmige freie Enden, die radial in die genannte Nut hineinragen und jeweils einen Bolzen umgreifen.

Die EP 1 227 221 A2 zeigt wiederum einen Verstellring, dessen Eingriffsbereiche für die Verstellhebel nur an einer Stirnseite des Verstellringes offen sind.

Die EP 1 722 073 A1 zeigt einen gebauten Verstellring, der aus einem Lagerring sowie einem damit an dessen einer Stirnseite verbundenen Hebeleingriffsring zusammengesetzt ist. Im zusammengesetzten Zustand der beiden Ringe sind die am Hebeleingriffsring ausgebildeten Eingriffsbereiche für die Verstellhebel der verstellbaren Leitschaufeln nur auf der vom Lagerring abgewandten Stirnseite des Verstellringes offen, so dass wiederum eine erschwerte Montage der variablen Turbinen- bzw. Verdichtergeometrie vorliegt.

Aus der DE 102 38 412 A1 geht ein weiterer Turbolader mit variabler Turbinengeometrie hervor, bei dem die Leitschaufeln durch Drehung eines Verstellringes betätigt werden, der eine Vielzahl von Eingriffsbereichen aufweist, in die die Verstellhebel der Leitschaufeln hineinragen.

Nachteilig an dieser Konstruktionsweise ist, dass eine Verstellkraft von dem Verstellring über einen Linienkontakt auf den Leitschaufelhebel übertragen wird. Eine Größe des Linienkontakts ist dabei für eine maximale Kraft verantwortlich, die der Verstellring auf die Leitschaufelhebel ausüben kann, ohne dass plastische Verformungen der Leitschaufelhebel und/oder des Verstellrings auftreten.

Die vorliegende Erfindung beschäftigt sich mit dem Problem, für eine Ladeeinrichtung mit einer variablen Turbinen-/Verdichtergeometrie und für ein Verfahren zur Herstellung eines in einer Ladeeinrichtung verwendbaren Verstellrings eine verbesserte oder zumindest eine andere Ausführungsform anzugeben, die sich insbesondere dadurch auszeichnet, dass zwischen dem Verstellring und den Leitschaufelhebeln größere Kräfte übertragbar sind, ohne dass plastische Verformungen des Verstellrings und/oder der Leitschaufelhebel auftreten.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, auf den Stirnseiten des Verstellringes an den Eingriffsbereichen Verstärkungen vorzusehen, um den Linienkontakt zwischen den in die Eingriffsbereiche hineinragenden Teilen der Verstellhebel und den Eingriffsbereichen zu vergrößern. Damit wird gewährleistet, dass die zwischen dem Verstellring und den Verstellhebeln auftretenden Kräfte ohne plastische Verformungen übertragbar sind. Besonders vorteilhaft ist bei der Erfindung, dass durch eine Materialverstärkung an den Eingriffsbereichen des Verstellringes zum Einen der Linienkontakt durch eine Verlängerung der Linie vergrößert wird und somit höhere Kräfte übertragen werden können, und zum Anderen, dass das Gesamtgewicht des Verstellringes nur geringfügig erhöht wird, wodurch auch das Massenträgheitsmoment nur geringfügig vergrößert wird. Somit ist bei geringfügig erhöhtem Gewicht und ebenso geringfügig erhöhter Massenträgheit eine Vergrößerung des Linienkontaktes möglich.

Ein solcher Verstellring kann durch ein Verfahren hergestellt werden, bei dem die Verstärkung durch Auftragsschweißen und/oder einen umformenden Fertigungsprozess und/oder durch einen formenden Fertigungsprozess, wie z. Bsp. ein Metallpulverspritzgussverfahren, hergestellt wird. Dabei könnte z. B. die Verstärkung des Verstellrings zweckmäßigerweise durch Stanzen des Verstellrings und nachfolgendes Stauchen eines Teilbereichs des Verstellrings ausgebildet werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch:
- Fig. 1: eine variable Turbinen-/Verdichtergeometrie,
- Fig. 2: einen Ausschnitt aus einem Verstellring einer variablen Turbinengeometrie gemäß Fig. 1,
- Fig. 3: einen axialen Schnitt durch die variable Turbinengeometrie im Bereich eines Verstellhebels,
- Fig. 4: einen als eine Tellerfeder ausgeformten Hitzeschild in Einbaulage mit einer Ladeeinrichtung.

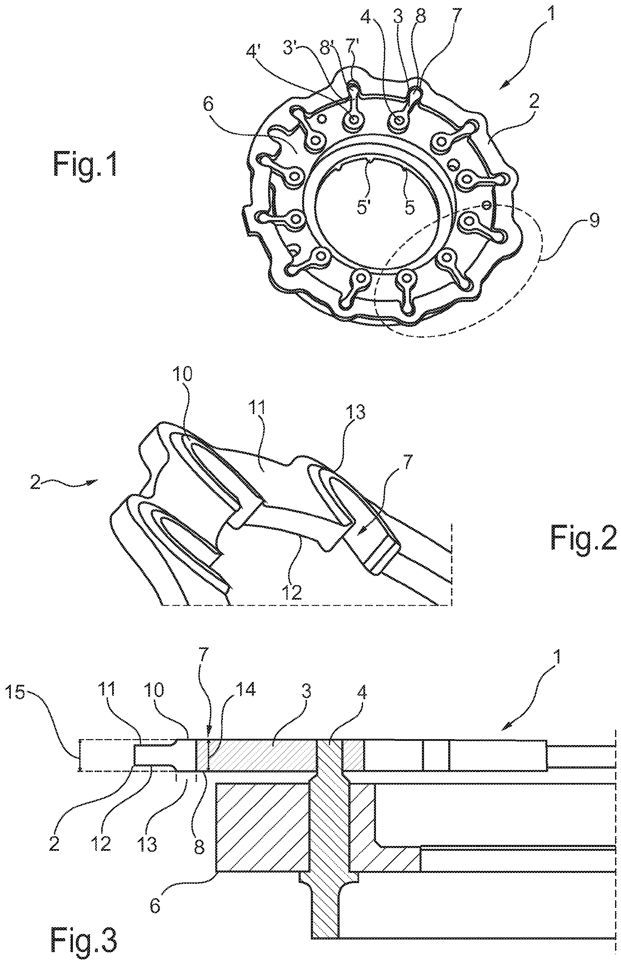

Gemäß der Fig. 1, umfasst eine variable Turbinen-/Verdichtergeometrie 1 einer Ladeeinrichtung einen Verstellring 2 und mehrere Verstellhebel 3, 3', die über jeweils einen Leitschaufellagerzapfen 4, 4' mit jeweils einer Leitschaufel 5, 5' drehfest verbunden sind. Dabei sind die Leitschaufellagerzapfen 4, 4' in einem Leitschaufelträger 6 gelagert. Damit sämtliche Leitschaufeln 5, 5' vorzugsweise gemeinsam verstellbar sind, ist der Verstellring 2 mit mehreren Eingriffsbereichen 7, 7' ausgestattet, in denen ein Abschnitt 8, 8' des jeweiligen Verstellhebels 3, 3' hineinragt.

Eine Markierung 9 kennzeichnet einen in Fig. 2 dargestellten, vergrößerten Ausschnitt des Verstellrings 2. Gemäß der Fig. 2 weist ein in dem Eingriffsbereich 7 verstärkter Verstellring 2 eine erhabene Verstärkung 10 auf einer Oberseite 11 und einer Unterseite 12 des Verstellrings 2 in einem um den Eingriffsbereich 7 angeordneten Teilbereich 13 des Verstellrings 2 auf. Dabei ist es denkbar, die erhabene Verstärkung 10 z. B. als Profilierung und/oder als Wulst und/oder als Aufkantung gegebenenfalls auch nur auf einer Seite 11, 12 auszuformen.

Ebenso ist es zweckmäßig, die Verstärkung 10 des Eingriffsbereichs 7 als ein separates, an dem Verstellring 2 fixierbares Bauteil auszubilden. In diesem Fall ist ein solches separates Bauteil mit dem Verstellring 2 z. B. durch Schweißen oder eine Nut- und Federkonstruktion zu verbinden. Dabei ist es besonders vorteilhaft, für das separate Bauteil ein höher belastbares Material zu verwenden. Dadurch ergibt sich die Möglichkeit den Verstellring 2 aus günstigeren Materialien zu produzieren und die teureren höherwertigen Materialien nur im Teilbereich 13 des Verstellrings 2 zu verwenden.

Desweiteren ist es zweckmäßig in zumindest einer durch die Oberseite 11 oder die Unterseite 12 des Verstellrings 2 definierten Ebene die Verstärkung 10 so breit zu gestalten, dass sie zumindest 2% der kleinsten Breite der Eingriffsbereichs 7 beträgt.

Entsprechend der Fig. 3 ist es zweckmäßig, dass eine Höhe 14 eines in den jeweiligen Eingriffsbereich 7 hineinragenden Abschnitts 8 des Verstellhebels 3 einer Höhe 15 des verstärkten Eingriffsbereichs 7 entspricht. In diesem Fall ist der Linienkontakt verlängert und dadurch optimiert.

In einer weiteren Ausführungsform soll die Höhe 15 des jeweiligen verstärkten Eingriffsbereichs 7 größer sein als die Höhe 14 des in den jeweiligen Eingriffsbereich 7 hineinragenden Abschnitts 8 des Verstellhebels 3. Dabei soll die Höhe 14 zumindest 80% der Höhe 15 betragen. Diese Konstruktionsweise berücksichtigt eventuell auftretende Materialunebenheiten in den Randbereichen des Eingriffsbereichs 7.

Die erfindungsgemäße Verstärkung 10 kann durch Auftragsschweißen und/oder einen umformenden sowie einen formenden Fertigungsprozess hergestellt werden. Als ein formender Fertigungsprozess ist z. B. ein Metallpulverspritzgussverfahren denkbar.

Es ist ebenso zweckmäßig, die Eingriffsbereiche 7 durch Stanzen des Verstellrings 3 herzustellen. Nachfolgendes axiales Stauchen des Verstellrings 2, bei dem der Teilbereich 13 jeweils um den Eingriffsbereich 7 des Verstellrings 2 von dem Stauchprozess ausgenommen wird, führt dann in diesem so beschriebenen Verfahren zu einer erhabenen Verstärkung 10 auf der Oberseite 11 und/oder auf der Unterseite 12 des Verstellrings 2 in der Umgebung der Eingriffsbereiche 7.

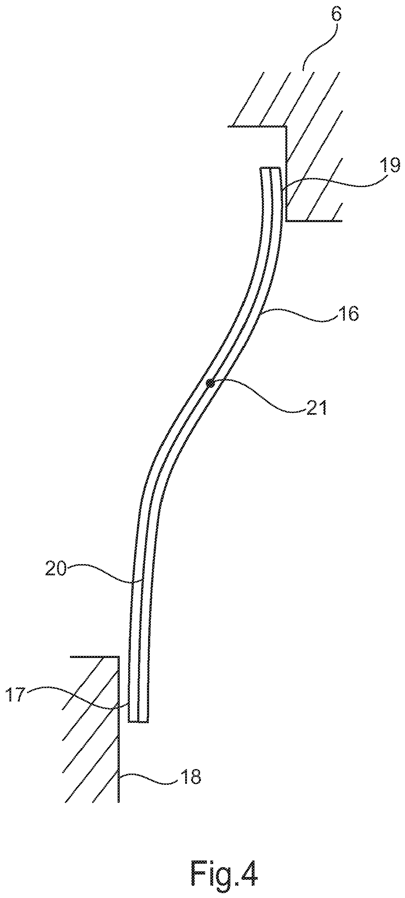

Gemäß Fig. 4 weist eine weitere Ausführungsform der Ladeeinrichtung einen Hitzeschild 16 in Form einer Tellerfeder auf. Dabei stützt sich der Hitzeschild 16 mit einer ersten Auflagerfläche 17 an einem Lagergehäuse 18 ab und mit zweiten Auflagerfläche 19 an dem Leitschaufelträger 6. Es ist vorteilhaft, wenn die Auflagerflächen 17, 19 des Hitzeschilds 16 parallel zueinander ausgebildet sind.

Bei einem Schnitt durch die Rotationsachse des lochscheibenartig ausgeformten Hitzeschildes 16 entstehen zwei Schnittflächen, die jeweils eine Mittellinie 20 aufweisen. Dabei soll die Mittellinie 20 einen Wendepunkt 21 aufweisen.

## Patentansprüche

1. Ladeeinrichtung, insbesondere ein Abgasturbolader für ein Kraftfahrzeug, mit einer variablen Turbinen-/Verdichtergeometrie (1), umfassend mehrere verstellbare Leitschaufeln (5, 5'), die jeweils über einen zugehörigen Verstellhebel (3, 3') mit einem Verstellring (2) in Eingriff stehen und durch diesen vorzugsweise gemeinsam verstellbar sind,
wobei die Verstellhebel (3, 3') jeweils mit Abschnitten (8, 8') in Eingriffsbereiche (7, 7') des Verstellringes (2) hineinragen, und diese Eingriffsbereiche (7, 7') den Verstellring (2) zwischen dessen Ober- und Unterseite vollständig durchsetzen und an der Ober- und Unterseite sowie am Innenumfang des Verstellringes (2) offen sind, **dadurch gekennzeichnet,**
**dass** der Verstellring (2) an den Eingriffsbereichen (7, 7') durch eine als Wulst, Aufkantung und/oder als Profilierung auf seiner Ober- und Unterseite (11, 12) ausgebildete Verstärkung (10) aufweist.

2. Ladeeinrichtung nach Anspruch 1,
**dadurch gekennzeichnet,**
**dass** die Verstärkung (10) des Eingriffsbereichs (7,7') als ein separates, an dem Verstellring (2) fixierbares Bauteil ausgebildet ist.

3. Ladeeinrichtung nach Anspruch 1 oder 2,
**dadurch gekennzeichnet,**
**dass** in zumindest einer durch die Ober- oder Unterseite (11, 12) des Verstellringes (2) definierten Ebene die Breite der Verstärkung (10) zumindest 2 % der kleinsten Breite des Eingriffsbereiches (7, 7') beträgt.

4. Ladeeinrichtung nach einem der Ansprüche 1 bis 3,
**dadurch gekennzeichnet,**
**dass** eine Höhe (14) eines in den jeweiligen Eingriffsbereich (7, 7') hineinragenden Abschnitts (8, 8') des Verstellhebels (3, 3') einer Höhe (15) des verstärkten Eingriffbereichs (7,7') entspricht.

5. Ladeeinrichtung nach einem der Ansprüche 1 bis 4,
**dadurch gekennzeichnet,**
**dass** die Höhe (14) des in den jeweiligen Eingriffsbereich (7,7') hineinragenden Abschnitts (8, 8') des Verstellhebels (3, 3') zumindest 80 % des verstärkten Eingriffbereichs (7,7') entspricht.

6. Verfahren zur Herstellung eines in einer Ladeeinrichtung, nach einem der Ansprüche 1 bis 5, verwendbaren Verstellringes (2),
**dadurch gekennzeichnet,**
**dass** die Verstärkung (10) durch Auftragsschweißen und/oder einen umformenden Fertigungsprozess und/oder durch einen formenden Fertigungsprozess, wie z. B. ein Metallpulverspritzgussverfahren, hergestellt wird.

7. Verfahren nach Anspruch 6,
**dadurch gekennzeichnet,**
**dass** die Verstärkung (10) durch Stanzen des Verstellringes (2) und nachfolgendes Stauchen eines Teilbereichs des Verstellringes (2) ausgebildet wird.

## Claims

1. A charging device, more preferably an exhaust gas turbocharger for a motor vehicle, with a variable turbine/compressor geometry (1) comprising a plurality of adjustable guide blades (5, 5'), each of which is engaged in an adjusting ring (2) via a corresponding lever (3, 3') and which are preferentially jointly adjustable through said adjusting ring,
wherein
at least the adjusting ring (2) in an engagement region (7, 7') that is in contact with the respective adjusting levers (3, 3') is reinforced
and
the engagement regions (7, 7') permeate the adjusting ring (2) entirely between its upper side and its lower side being open on their upper side and lower side as well as on the inner circumference of the adjusting ring (2)
**characterized in that**
the adjusting ring (2) in the engagement regions (7, 7') has a reinforcement (10) embodied as bead, folded up and/or as profiling on an upper and/or lower side (11, 12).

2. The charging device according to Claim 1
**characterized in that**
the reinforcement (10) of the engagement region (7, 7') is embodied as a separate component that can be fixed to the adjusting ring (2).

3. The charging device according to Claim 1 or 2,
**characterized in that**
at least one plane defined by the upper or lower side (11, 12) of the adjusting ring (2) the width of the reinforcement (10) amounts to an least 2% of the smallest width of the engagement region (7, 7').

4. The charging device according claims 1 to 3,
**characterized in that**
a height (14) of a section (8, 8') of the adjusting lever (3, 3') protruding into the respective engagement region (7, 7') correspondents to a height (15) of the reinforced engagement region (7, 7').

5. The charging device according to claims 1 to 4,
**characterized in that**
the height (14) of the section (8, 8') of the adjusting lever (3, 3') protruding into the respective engagement region (7, 7') correspondents to at least 80% of the reinforced engagement region (7, 7').

6. A method for producing an adjusting ring (2) that can be used in a charging device, more preferably according to one of the Claims 1-5
**characterized in that**
the reinforcement (10) is produced through build-up welding and/or a forming manufacturing process and/or a shaping manufacturing process such as for example a metal injection moulding method.

7. The method according to Claim 6,
**characterized in that**
the reinforcement (10) is formed through stamping of the adjusting ring (2) and subsequent upsetting of a path region of the adjusting ring (2).

## Revendications

1. Dispositif de charge, notamment turbocompresseur de gaz d'échappement pour un véhicule automobile, à géométrie turbine/compresseur (1) variable, comprenant plusieurs aubes directrices (5, 5') pouvant être réglées, qui sont en prise avec une bague de réglage (2) respectivement par l'intermédiaire d'un levier de réglage (3, 3') associé et qui peuvent être réglées de préférence conjointement par celle-ci,
dans lequel les leviers de réglage (3, 3') dépassent respectivement par des tronçons (8, 8') dans des zones de prise (7, 7') de la bague de réglage (2), et lesdites zones de prise (7, 7') traversent en totalité la bague de réglage (2) entre le côté supérieur et le côté inférieur de cette dernière et sont ouvertes au niveau du côté supérieur et du côté inférieur ainsi qu'au niveau de la périphérie intérieure de la bague de réglage (2), **caractérisé en ce**
**que** la bague de réglage (2) présente, au niveau des zones de prise (7, 7'), un renforcement (10) réalisé par un bourrelet, rebord et/ou sous la forme d'un profilage sur son côté supérieur et son côté inférieur (11, 12).

2. Dispositif de charge selon la revendication 1,
**caractérisé en ce**
**que** le renforcement (10) de la zone de prise (7, 7') est réalisé sous la forme d'un composant séparé, pouvant être fixé au niveau de la bague de réglage (2).

3. Dispositif de charge selon la revendication 1 ou 2,
**caractérisé en ce**
**que** dans au moins un plan défini par le côté supérieur ou le côté inférieur (11, 12) de la bague de réglage (2), la largeur du renforcement (10) est égale au moins à 2 % de la plus petite largeur de la zone de prise (7, 7').

4. Dispositif de charge selon l'une quelconque des revendications 1 à 3,
**caractérisé en ce**
**qu'**une hauteur (14) d'un tronçon (8, 8'), dépassant dans la zone de prise (7, 7') respective, du levier de réglage (3, 3') correspond à une hauteur (15) de la zone de prise (7, 7') renforcée.

5. Dispositif de charge selon l'une quelconque des revendications 1 à 4,
**caractérisé en ce**
**que** la hauteur (14) du tronçon (8, 8'), dépassant dans la zone de prise (7, 7') respective, du levier de réglage (3, 3') correspond au moins à 80 % de la zone de prise (7, 7') renforcée.

6. Procédé servant à fabriquer une bague de réglage (2) pouvant être utilisée dans un dispositif de charge selon l'une quelconque des revendications 1 à 5,
**caractérisé en ce**
**que** le renforcement (10) est fabriqué par soudage à superposition et/ou par un processus de production de mise en forme et/ou par un processus de production de moulage, tel qu'un procédé de moulage par injection de poudres métalliques.

7. Procédé selon la revendication 6,
**caractérisé en ce**
**que** le renforcement (10) est réalisé par estampage de la bague de réglage (2) et par refoulement subséquent d'une zone partielle de la bague de réglage (2).
